Europäisches Patentamt

**European Patent Office**

**Office européen des brevets**

(19)

(11) Numéro de publication: **0 012 681**
**B1**

(12) **FASCICULE DE BREVET EUROPEEN**

(45) Date de publication du fascicule du brevet: 23.06.82

(21) Numéro de dépôt: 79400988.6

(22) Date de dépôt: 07.12.79

(51) Int. Cl.³: **F 27 D 1/06**, F 27 D 1/12, F 27 B 3/14, C 04 B 35/04

(54) **Procédé perfectionné de construction de fours électriques sidérurgiques et élément réfractaire composite pour sa mise en oeuvre.**

(30) Priorité: 15.12.78 FR 7835372

(43) Date de publication de la demande:
25.06.80 Bulletin 80/13

(45) Mention de la délivrance du brevet:
23.06.82 Bulletin 82/25

(84) Etats contractants désignés:
BE DE FR GB IT LU NL SE

(56) Documents cités:
FR - A - 2 247 689
FR - A - 2 379 784
US - A - 2 599 566
US - A - 3 190 626
US - A - 3 832 478

(73) Titulaire: **SOCIETE EUROPEENNE DES PRODUITS REFRACTAIRES**
**67, Boulevard du Château**
**F-92200 Neuilly-sur-Seine (FR)**

(72) Inventeur: **Ayme-Jouve, Michel**
**7, Rue de l'Amelier**
**F-84000 Avignon (FR)**
Inventeur: **Esnoult, Marc**
**Chemin de Vaucrose Petit Gigognan**
**F-84700 Sorgues (FR)**

(74) Mandataire: **De Boisse, Louis**
**37, Avenue Franklin D. Roosevelt**
**F-75008 Paris (FR)**

Courier Press, Leamington Spa, England.

# Procédé perfectionné de construction de fours électriques sidérurgiques et élément réfractaire composite pour sa mise en oeuvre

L'invention concerne un procédé perfectionné de construction de fours à arc sidérurgiques, en particulier des parties de ces fours qui ne sont pas en contact prolongé avec le bain liquide métallique, ainsi qu'un élément réfractaire composite pour sa mise en oeuvre.

Depuis plusieurs années, la puissance des fours à arc rapportée à leur capacité, ou puissance spécifique exprimée en puissance nominale K.V.A. de leur transformateur par tonne d'acier liquide, a été en augmentant et dépasse souvent 500 KVA/t (four UHP), la puissance utilisée atteignant même parfois 750 KW/t pendant la période de fusion. Cette évolution entraîne un besoin de méthodes nouvelles de revêtement des parois des fours.

Les zones les plus sollicitées des revêtements de fours à arc, c'est-à-dire la ligne de laitier, le trou de coulée et surtout les parties du mur situées en face des trois électrodes sont souvent constituées de blocs réfractaires en magnésie-oxyde de chrome électrofondu. Des blocs de ce genre sont vendus sous la désignation commerciale CORHART C.104 par la Demanderesse en Europe et par la Société CORHART REFRACTORIES aux Etats-Unis.

Ces blocs réfractaires électrofondus se présentent sous forme de blocs sciés dans des lingots dont la contraction à la solidification est dispersée à l'état de macroporosité formée de pores d'un diamètre de 1 à 10 mm, leur porosité totale étant de 16 à 20% avec une très faible microporosité, ce qui, en combinaison avec leur très forte cohésion cristalline, les rend supérieurs à d'autres matériaux réfractaires tels que les matériaux réfractaires basiques cuits, même à base de grains fondus réagglomérés.

L'utilisation de ces blocs pour réaliser les zones les plus sollicitées des revêtements de fours à arc, en combinaison avec des matériaux réfractaires moins nobles pour réaliser les zones moins sollicitées, permet généralement d'équilibrer le profil d'usure des revêtements pour une large gamme de puissance et de capacité des fours, en optimisant la productivité et le coût des matériaux réfractaires.

Lorsque les conditons de service deviennent trop sévères et en particulier quand la puissance spécifique utilisée en période de fusion dépasse 500 KW/t, l'utilisation de tels blocs réfractaires ne permet plus d'atteindre des durées de vie en service aussi satisfaisantes. En effet, particulièrement aux "points chauds" du revêtement, la destruction des blocs réfractaires électrofondus se produit trop rapidement. Cette destruction résulte notamment de l'attaque chimique à haute température par les fumées et projections de laitiers, et de l'écaillage des faces de travail sous l'effet de variations rapides de températures, les deux phénomènes se produisant à des vitesses et dans des proportions variables suivant le mode d'exploitation des fours.

L'invention a pour but de fournir un procédé perfectionné de construction de fours à arc sidérurgiques, en particulier de la partie supérieure de la paroi de ces fours qui n'est pas en contact prolongé avec le bain liquide métallique, qui permet d'obtenir des durées de vie en service notablement prolongées pour ladite partie en abaissant la température de travail du matériau réfractaire constituant cette partie.

L'invention a pour autre but de fournir un élément réfractaire composite utile pour la mise en oeuvre du procédé de l'invention.

L'invention est basée sur la découverte qu'en édifiant au moins certaines zones de la partie supérieure de la paroi réfractaire d'un four à arc sidérurgique, qui n'est pas en contact prolongé avec le bain liquide métallique, mais qui peut l'être pendant de courtes périodes, par exemple pendant le basculement du four pour la coulée, à l'aide de blocs d'un matériau réfractaire à base d'oxydes, relativement peu conducteur de la chaleur, et de blocs de graphite, bon conducteur de la chaleur, disposés de façon alternée, il était possible de réduire de façon importante l'usure en service desdites zones et de prolonger ainsi la durée de vie de ladite paroi réfractaire.

Plus précisément, l'invention concerne un procédé de construction d'au moins certaines zones de la partie supérieure de la paroi réfractaire d'un four à arc électrique qui n'est pas en contact prolongé avec le bain liquide métallique, impliquant l'utilisation d'éléments refroidisseurs en une matière bonne conductrice de la chaleur, caractérisé en ce qu'on juxtapose, de façon alternée, des blocs en un matériau réfractaire à base d'oxydes et des blocs en graphite, ces blocs s'étendant de la face interne à la face externe de la paroi réfractaire et les blocs formant une rangée étant décalés par rapport aux blocs constituant les rangées adjacentes de façon que chaque bloc en graphite soit entouré de blocs en matériau réfractaire à base d'oxydes, la largeur $l_a$ de chaque bloc en matériau réfractaire à base d'oxydes étant comprise entre 80 et 150 mm et la largeur $l_b$ de chaque bloc en graphite étant comprise entre 10 et 50 mm.

Selon un mode de mise en oeuvre préféré, il est prévu, en outre, d'interposer au moins une tôle d'acier entre les blocs d'une rangée et les blocs des rangées adjacentes et entre au moins certains des blocs d'une même rangée, par exemple entre chaque paire de blocs accolés d'une rangée et les paires de blocs adjacentes de ladite rangée.

L'invention concerne aussi un élément réfractaire composite utile pour la mise en oeuvre du procédé préféré de l'invention, qui comprend au moins une paire de blocs accolés constitués de matières réfractaires différentes s'étendant de l'intrados à l'extrados de l'élément et qui est revêtu d'une tôle d'acier sur au moins deux de ses faces adjacentes s'étendant de l'intrados à l'extrados, caractérisé en ce que l'un des blocs de la paire est constitué d'un matériau réfractaire à base d'oxydes et l'autre bloc est constitué de graphite, et en ce que la largeur $l_a$ de chaque bloc en matériau réfractaire à base d'oxydes est comprise entre 80 et 150 mm et la largeur $l_b$ de chaque bloc en graphite est comprise entre 10 et 50 mm. De préférence la tôle d'acier revêt les quatre faces de l'élément composite s'étendant de l'intrados à l'extrados. L'expression "au moins une paire de blocs" signifie que l'élément composite peut comprendre plus d'une paire des blocs définis, par exemple 2, 3, ou 4 paires.

Le plus souvent, toutefois, on utilisera des éléments composites comprenant une seule paire de blocs et, en conséquence, lorsqu'on parlera d'éléments composites dans la suite de la présente description, il s'agira d'éléments à une paire de blocs. L'utilisation d'éléments composites à plusieurs paires de blocs peut, toutefois, être avantageuse dans certains cas particuliers où l'utilisateur désire metre en place des panneaux de relativement grandes dimensions d'un seul coup.

Par "intrados" et "extrados" on désigne, respectivement, la face de l'élément qui est tournée vers l'intérieur du four et celle qui est tournée vers l'extérieur du four.

Des éléments réfractaires composites sont connus depuis longtemps pour la construction de fours métallurgiques. Par exemple, le brevet britannique N° 925 646 décrit des éléments composites revêtus d'une tôle métallique dont une portion est formée d'un matériau réfractaire cuit, par exemple d'oxyde de chrome/magnésie cuit, et l'autre portion est formée d'un matériau réfractaire cru, par exemple de magnésie/oxyde de chrome cru. Des éléments composites d'un type voisin sont également décrits dans le brevet britannique N° 907 285.

Le brevet des E.U.A. n° 3 190 626 rappelle, de son côté, dans son préambule, qu'on avait déjà utilisé des revêtements pour fours à arc électrique, constitués de briques céramiques et de briques carbonées disposées de façon alternée. Les briques carbonées ne sont pas, toutefois, des briques en graphite mais des briques imprégnées de substances carbonées, par exemple du goudron ou brai, dont les propriétés de conductibilité de la chaleur ne peuvent être comparées à celles du graphite. D'ailleurs, le brevet des E.U.A. n° 3 190 626 mentionne que les résultats obtenus avec un tel revêtement composite n'ont pas été fameux.

L'invention peut être mise en oeuvre avec tous les matériaux réfractaires à base d'oxydes utilisables pour la construction de fours sidérurgiques, en particulier ceux dont l'usure en service s'opère principalement par fissuration et écaillage dus aux variations de température dans le four ou par corrosion par les projections de laitier et les fumées à haute température présentes dans l'atmosphère du four. Elle est particulièrement utile avec les matériaux réfractaires électrofondus du type magnésie/oxyde de chrome, tels que ceux décrits dans les brevets américains Nos. 2 599 566 et 2 690 974. Un exemple de matériau réfractaire électrofondu de ce type disposable dans le commerce sous forme de blocs et largement utilisé dans la construction de fours sidérurgiques est le CORHART C.104 fabriqué aux U.S.A. par CORHART REFRACTORIES CO. et, en France, par la SOCIETE EUROPEENNE DES PRODUITS REFRACTAIRES. Toutefois, l'invention peut aussi être mise en oeuvre avec des matériaux réfractaires agglomérés à base d'oxydes, c'est-à-dire des matériaux réfractaires obtenus par cuisson à haute température de grains à base d'oxyde moulés sous la forme de blocs ou encore avec des matériaux réfractaires frittés à base d'oxydes. Un exemple d'un tel matériau est celui formé à partir de grains réfractaires électrofondus du type magnésie/oxyde de chrome mentionné ci-dessus. Ces matériaux sont bien connus de l'homme de l'art et il est superflu de les décrire davantage.

La longévité accrue des parois réfractaires des fours à arc construites selon le procédé de l'invention et/ou à l'aide des éléments composites de l'invention résultant de deux effets distincts:

a) Il semble qu'il s'établisse une protection mutuelle entre les blocs réfractaires à base d'oxydes et les blocs de graphite, les blocs de graphite retenant les écailles qui se forment dans les blocs à base d'oxydes et retardant, de ce fait, leur chute dans le bain fondu. Par ailleurs, du fait que des blocs réfractaires à base d'oxydes entourent chaque bloc de graphite, les projections de laitier forment un revêtement de laitier sur la surface des blocs de graphite exposée à l'atmosphère du four qui protège le graphite des effets de l'oxydation. On sait, en effet, que des parois de four réalisées en graphite seul résistent mal aux atmosphères oxydantes à haute température. Le maintien d'un revêtement de laitier sur la surface exposée des blocs de graphite est rendu possible, bien que le laitier n'adhère pas normalement au graphite, par suite de la présence de blocs réfractaires à base d'oxydes tout autour de chaque bloc de graphite. En effet, les projections de laitier adhèrent aux blocs à base d'oxydes et finissent par former des ponts recouvrant les surfaces de graphite.

b) Grâce à la bonne conductibilité thermique du graphite, des calories peuvent être évacuées rapidement du four en particulier lors des pointes de température survenant au cours du fonctionnement du four. Egalement, les blocs de graphite évacuent des calories à partir des blocs à base d'oxydes voisins. Tout ceci permet de réduire l'importance de l'effet des flux thermiques auxquels sont soumis les blocs réfractaires à base d'oxydes et ralentit donc le processus d'écaillage desdits blocs. Cet effet de refroidissement peut être ajusté en jouant sur le rapport surface transversale de chaque bloc en graphite/surface transversale de chaque bloc réfractaire à base d'oxydes, ainsi que cela est évident. En effet, plus la surface occupée par les blocs de graphite sera importante, plus l'effet de refroidissement sera prononcé.

En pratique, on a déerminé que la largeur $l_b$ de chaque bloc en graphite devait être comprise entre 10 et 50 mm, de préférence entre 20 et 40 mm. Il est difficile, en effet, d'obtenir des blocs ou plaques de graphite d'une largeur (ou épaisseur) de moins de 10 mm présentant une résistance mécanique suffisante. Par ailleurs, une largeur supérieure à 50 mm est généralement superflue et rend les blocs de graphite plus vulnérables à l'attaque par oxydation. En ce qui concerne les blocs réfractaires à base d'oxydes, on a trouvé que leur largeur $l_a$ doit être comprise entre 80 et 150 mm. Au-delà de 150 mm, l'effet de refroidissement exercé par les blocs en graphite sur les blocs réfractaires à base d'oxydes devient insuffisant, notamment aux centres des blocs à base d'oxydes. Au-dessous de 80 mm de largeur, les blocs à base d'oxydes deviennent trop coûteux ou mal commodes à utiliser.

La hauteur h des blocs réfractaires à base d'oxydes et des blocs en graphite peut aller, par exemple, de 75 à 250 mm environ, tandis que leur longuer L (de l'intrados à l'extrados) peut aller, par exemple, de 300 à 600 mm environ.

Pour obtenir les meilleurs résultats, il faut veiller à ce qu'il existe un bon contact thermique entre chaque bloc en graphite et le ou les blocs à base d'oxydes contre le(s) quel(s) il est en contact direct. A cette fin, il faut que ces blocs soient en contact étroit et qu'il n'y ait pas de particules ou autres débris interposés entre ces blocs.

Comme on l'a indiqué ci-dessus, on utilise, de préférence, une tôle d'acier intermédiaire. Quoique les températures régnant dans le four à arc soient suffisantes pour fondre l'acier, on a observé qu'il ne se produit, en fait, qu'une attaque limitée de la tôle d'acier intermédiaire sur une profondeur de quelques centimètres (2 à 4 cm par exemple) du fait que cette tôle est en quelque sorte protégée par les blocs entre lesquels elle est prise en sandwich. Le rôle de cette tôle est de lier les blocs entre eux. En effet, en service, l'acier de la tôle fond au voisinage de l'intrados des blocs, formant ainsi une maçonnerie très compacte. Il peut se produire aussi une certaine réaction entre les blocs à base d'oxydes et l'acier de la tôle.

Dans le cas où l'on utilise des éléments composites selon l'invention (à une paire de blocs) pour construire au moins certaines zones de la partie supérieure de la paroi réfractaire, il suffit, pour obtenir l'interposition d'une tôle d'acier entre chaque élément, après juxtaposition et empilage d'une pluralité de ceux-ci, de revêtir chaque élément d'une tôle d'acier sur deux faces adjacentes s'étendant de l'intrados à l'extrados. Ces tôles peuvent être maintenues fixées sur l'élément de toute façon appropriée, par exemple par collage ou par des liens mécaniques. On peut, toutefois, aussi prévoir le revêtement de trois faces ou des quatre faces de l'élément s'étendant de l'intrados à l'extrados. Dans ce cas, il y aura, après construction de la paroi réfractaire, au moins certains endroits où existeront des doubles épaisseurs de tôles entre les éléments, ainsi que cela est évident.

Au surplus, dans le cas de l'élément composite préféré selon l'invention revêtu d'une tôle d'acier continue sur ses quatre faces s'étendant de l'intrados à l'extrados, la tôle d'acier joue un rôle de protection vis-à-vis des blocs constitutifs dudit élément au cours de la manipulation et du transport de celui-ci, ainsi qu'un rôle de maintien desdits blocs en position accolée et en contact étroit, ce qui facilite la mise en place de l'élément au cours de la construction de la paroi réfractaire du four et assure un bon contact thermique entre les blocs. Dans ce cas également, il ne sera pas nécessaire de prévoir des moyens de fixation de la tôle sur l'élément, celle-ci pouvant être repliée autour de l'élément de façon qu'elle enserre fermement les deux blocs constitutitifs de ce dernier.

L'épaisseur de la tôle n'est pas très critique. A titre indicatif, elle peut aller de 0,5 à 2 mm d'épaisseur. On peut utiliser une tôle d'acier de qualité ordinaire.

L'élément composite de l'invention peut présenter une forme parallélépipédique ou la forme d'un claveau, en particulier dans le cas où il sera destiné à la construction d'une paroi courbe.

La description qui va suivre en regard du dessin annexé donné à titre d'exemple non limitatif fera bien comprendre comment l'invention peut être réalisée, les particularités qui ressortent tant du dessin que du texte faisant, bien entendu, partie de ladite invention.

La figure 1 est une vue en élévation montrant une portion de paroi réfractaire construite selon le procédé de l'invention;

la figure 2 est une vue de l'intrados d'un élément composite selon l'invention comprenant une paire de blocs;

la figure 3 est une vue en coupe horizontale de l'élément de la figure 2; et

la figure 4 est une vue en élévation montrant une portion de paroi réfractaire réalisée à l'aide d'éléments semblables à celui des figures 2 et 3.

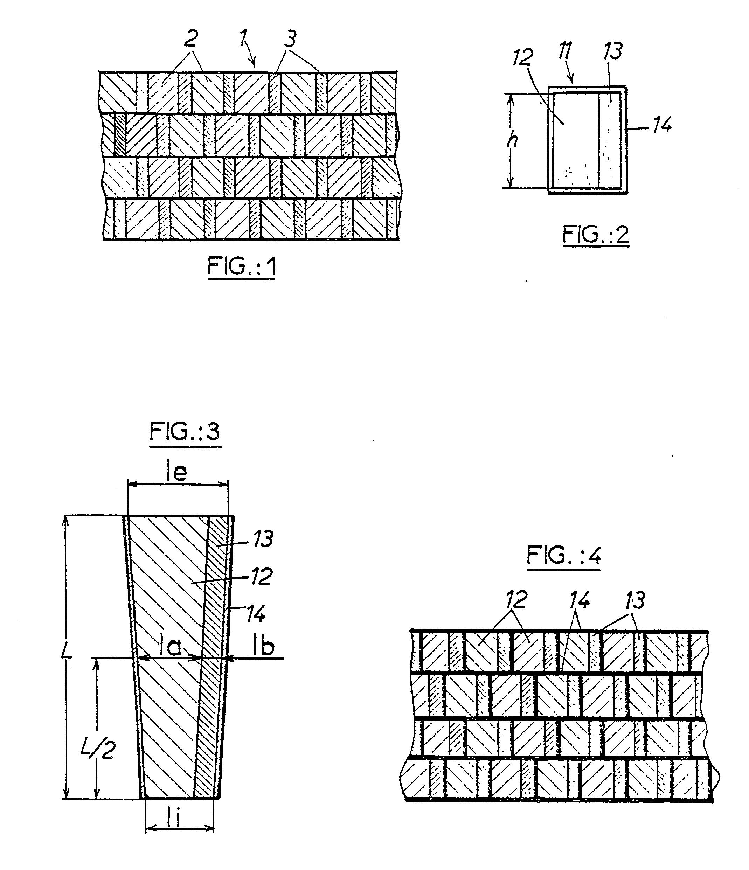

Sur la figure 1, on voit une portion, désignée par la référence générale 1, de paroi réfractaire, par exemple une portion de paroi située en face d'une électrode de four à arc. Cette portion 1 est réalisée par simple juxtaposition de blocs 2 en matériau réfractaire électrofondu à base d'oxydes et de blocs 3 en graphite disposés de façon alternée, les blocs d'une rangée donnée étant décalés par rapport aux blocs des rangées adjacentes de façon que tout bloc 3 en graphite soit entouré de blocs 2 en matériau électrofondu.

Les figures 2 et 3 illustrent un élément composite selon l'invention, désigné par la référence générale 11. Cet élément est formé d'un bloc 12 en matériau réfractaire électrofondu à base d'oxydes, par exemple en "CORHART C.104" dont la composition en poids est la suivante: MgO: 55%, $Cr_2O_3$: 20,5%, FeO: 12,5%, $Al_2O_3$: 7%, $SiO_2$: 2,5%, CaO: 1,5%, $TiO_2$: 0,5%, divers: 0,5%, et d'un bloc 13 en graphite, l'ensemble formé par les blocs 12 et 13 étant enveloppé par une tôle d'acier ordinaire 14 d'une épaisseur de 1,5 mm, sauf sur ses faces d'intrados et d'extrados. En d'autres termes, la tôle 14 recouvre les faces de l'ensemble s'étendant de l'intrados à l'extrados. Le bloc 12, qui est obtenu par sciage d'un lingot de plus grande taille, présente la forme d'un coin ou claveau tandis que le bloc 13 est d'épaisseur sensiblement constante, étant obtenu par découpage d'une plaque. L'élément présente donc, au total, la forme d'un claveau et convient pour la construction d'une paroi cylindrique. A titre indicatif, un tel élément composite peut présenter les dimensions suivantes: longeur L (de l'intrados à l'extrados): 450 mm, hauteur h: 152 mm, largeur moyenne l: 130 mm (largeur moyenne $l_a$ du bloc 12: 100 mm; largeur $l_b$ du bloc 13: 30 mm, avec $l_a+l_b=1$). Les largeurs $l_i$ et $l_e$ de l'élément à l'intrados et à l'extrados, respectivement, seront ajustées en fonction du rayon de la paroi cylindrique à construire, ainsi que cela est évident.

En variante, bien entendu, on pourrait fabriquer des éléments parallélépipédiques ($l_i=l_e$) si la paroi à construire est plane.

Les parois réalisées selon l'invention présentent une résistance à l'usure en service exceptionnellement élevée et sensiblement uniforme.

Des essais comparatifs d'usure dans un four à arc sidérurgique UHP, d'une capacité de 100—120 tonnes et d'une puissance de 80 MVA, ont donné les résultats suivants:

| Nature des blocs constituant la paroi | Usure (en mm) par coulée |
|---|---|
| — blocs en CORHART C. 104 normal (densité 3,15), non tôles | 6 |
| — blocs en CORHART C. 104 normal, tôles | 5 |
| — blocs en CORHART C. 104 dense (densité 3,45), non tôles | 4 |
| — éléments composites des figures 2 et 3 | 1 à 2 |

Ces résultats illustrent, de façon éclatante, les avantages fournis par l'invention, à savoir la réalisation de parois réfractaires, ou tout au moins de certaines zones sollicitées de celles-ci, présentant une résistance à l'usure accrue et donc la possibilité d'obtenir des durées de campagne prolongées pour les fours et, donc, des productivités accrues de ceux-ci.

## Revendications

1. Un procédé de construction d'au moins certaines zones de la partie supérieure de la paroi réfractaire d'un four à arc électrique sidérurgique qui n'est pas en contact prolongé avec le bain liquide métallique, impliquant l'utilisation d'éléments refroidisseurs en une matière bonne conductrice de la chaleur, caractérisé en ce qu'on juxtapose, de façon alternée, des blocs en un matériau réfractaire à base d'oxydes et des blocs en graphite, ces blocs s'étendant de la face interne à la face externe de la paroi réfractaire et les blocs formant une rangée étant décalés par rapport aux blocs constituant les rangées adjacentes de façon que chaque bloc en graphite soit entouré de blocs en matériau réfractaire à base d'oxydes, la largeur $l_a$ de chaque bloc en matériau réfractaire à base d'oxydes étant comprise entre 80 et 150 mm et la largeur $l_b$ de chaque bloc en graphite étant comprise entre 10 et 50 mm.

2. Un procédé selon la revendication 1, caractérisé en ce que, en outre, on interpose au moins une tôle d'acier entre les blocs d'une rangée et les blocs des rangées adjacentes et entre au moins certains des blocs d'une même rangée.

3. Un procédé selon la revendication 1 ou 2, caractérisé en ce que les blocs en matériau réfractaire à base d'oxydes sont des blocs en matériau réfractaire électrofondu du type magnésie/oxyde de chrome.

4. Un procédé selon la revendication 3, caractérisé en ce que les blocs ont la composition suivante: en poids: MgO: 55%, $Cr_2O_3$: 20,5%, FeO: 12,5%, $Al_2O_3$: 7%, $SiO_2$: 2,5%, CaO: 1,5%, $TiO_2$: 0,5%, divers: 0,5%.

5. Un procédé selon l'une quelconque des revendications 1 à 4, caractérisé en ce que chaque bloc en graphite a une largeur $l_b$ comprise entre 20 et 40 mm.

6. Un élément réfractaire composite utile pour la mise en œuvre du procédé selon la revendication 1, qui comprend au moins une paire de blocs accolés constitués de matières réfractaires différentes s'étendant de l'intrados à l'extrados de l'élément et qui est revêtu d'une tôle d'acier sur au moins deux de ses faces adjacentes s'étendant de l'intrados à l'extrados, caractérisé en ce que l'un des blocs de la paire est constitué d'un matériau réfractaire à base d'oxydes et l'autre bloc est constitué de graphite, et en ce que la largeur $l_a$ de chaque bloc en matériau réfractaire à base d'oxydes est comprise entre 80 et 150 mm et la largeur $l_b$ de chaque bloc en graphite est comprise entre 10 et 50 mm.

7. Un élément selon la revendication 6, caractérisé en ce que la tôle d'acier revêt les quatre faces de l'élément composite s'étandant de l'intrados à l'extrados.

8. Un élément selon la revendication 6 ou 7, caractérisé en ce que le bloc en matériau réfractaire à base d'oxydes est un bloc en matériau réfractaire électrofondu du type magnésie/oxyde de chrome.

9. Un élément selon la revendication 8, caractérisé en ce que le bloc a la composition suivante, en poids: MgO: 55%, $Cr_2O_3$: 20,5%, FeO: 12,5%, $Al_2O_3$: 7%, $SiO_2$: 2,5%, CaO: 1,5%, $TiO_2$: 0,5%, divers: 0,5%.

10. Un élément selon l'une quelconque des revendications 6 à 9, caractérisé en ce que chaque bloc en graphite a une largeur $l_b$ comprise entre 20 et 40 mm.

## Patentansprüche

1. Verfahren zur Herstellung mindestens einiger Zonen des oberen Teiles der feuerfesten Wand eines Verhüttungs-Elektrolichtbogenofens, welche Wand nicht in länger dauerndem Kontakt mit dem Bad aus flüssigem Metall ist, wobei Abkühlungselemente verwendet werden, die aus einem Material mit guter Wärmeleitfähigkeit bestehen, dadurch gekennzeichnet, daß abwechselnd Blöcke aus feuerfestem Material auf der Basis von Oxiden und Blöcke aus Graphit nebeneinandergesetzt werden, wobei sich die Blöcke von der Innenseite bis zur Außenseite der feuerfesten Wand erstrecken und die eine Reihe bildenden Blöcke gegenüber den Blöcken verschoben sind, die die benachbarten Reihen bilden, so daß jeder Block aus Graphit von Blöcken aus feuerfestem Material auf der Basis von Oxiden umgeben ist und wobei die Breite $l_a$ jedes Blockes aus feuerfestem Material auf der Basis von Oxiden zwischen 80 und 150 mm und die Breite $l_b$ jedes Blockes aus Graphit zwischen 10 und 50 mm liegt.

2. Verfahren nach Anspruch 1, dadurch gekennzeichnet, daß zwischen die Blöcke einer Reihe und die Blöcke der benachbarten Reihen und zwischen mindestens einige Blöcke einer Reihe mindestens ein Stahlblech eingefügt wird.

3. Verfahren nach Anspruch 1 oder 2, dadurch gekennzeichnet, daß die Blöcke aus feuerfestem Material auf der Basis von Oxiden Blöcke aus elektrisch erschmolzenem, feuerfestem Material des Magnesiumoxid/Chomoxid-Typs sind.

4. Verfahren nach Anspruch 3, dadurch gekennzeichnet, daß die Blöcke folgende Zusammensetzung haben (Angaben in Gewichtsprozenten): MgO: 55%, $Cr_2O_3$: 20,5%, FeO: 12,5%, $Al_2O_3$: 7%, $SiO_2$: 2,5%, CaO: 1,5%, $TiO_2$: 0,5% Verschiedenes: 0,5%.

5. Verfahren nach einem der Ansprüche 1 bis 4, dadurch gekennzeichnet, daß jeder Block aus Graphit eine Breite $l_b$ zwischen 20 und 40 mm aufweist.

6. Für die Ausführung des Verfahrens nach Anspruch 1 geeignetes zusammengesetztes, feuerfestes Element, das wenigstens ein Paar miteinander verbundener Blöcke aufweist, die aus verschiedenen feuerfesten Materialien bestehen, die sich von der Innenwölbung bis zur Außenwölbung des Elementes erstrecken und das auf wenigstens zwei seiner benachbarten Flächen, die sich von der Innenwölbung bis zur Außenwölbung erstrecken, mit einem Stahlblech überzogen ist, dadurch gekennzeichnet, daß einer der Blöcke des Paares aus einem feuerfesten Material auf der Basis von Oxiden und der andere Block aus Graphit besteht, und daß die Breite $l_a$ jedes Blockes aus feuerfestem Material auf der Basis von Oxiden zwischen 80 und 150 mm und die Breite $l_b$ jedes Blockes aus Graphit zwischen 10 und 50 mm liegt.

7. Element nach Anspruch 6, dadurch gekennzeichnet, daß das Stahlblech die vier, sich von der Innenwölbung zur Außenwölbung erstreckenden Flächen des zusammengesetzten Elementes überzieht.

8. Element nach Anspruch 6 oder 7, dadurch gekennzeichnet, daß der Block aus feuerfestem Material auf der Basis von Oxiden ein Block aus elektrisch erschmolzenem feuerfestem Material des Magnesiumoxid/Chromoxid-Typs ist.

9. Element nach Anspruch 8, dadurch gekennzeichnet, daß der Block folgende Zusammensetzung hat (Angaben in Gewichtsprozenten): MgO: 55%, $Cr_2O_3$: 20,5%, FeO: 12,5%, $Al_2O_3$: 7%, $SiO_2$: 2,5%, CaO: 1,5%, $TiO_2$: 0,5%, Verschiedenes: 0,5%.

10. Element nach einem der Ansprüche 6 bis 9, dadurch gekennzeichnet, daß jeder Block aus Graphit eine Breite $l_b$ zwischen 20 und 40 mm aufweist.

## Claims

1. A process for constructing at least certain areas of the upper part of the refractory wall of a metallurgical electric arc furnace which is not in prolonged contact with the liquid metal bath, which involves the use of cooling elements made of a good heat-conductive material, characterized by juxtaposing alternately blocks, of an oxide-based refractory material and graphite blocks, these blocks extending from the inner face to the outer face of the refractory wall and the blocks forming each row being offset with respect to the blocks forming adjacent rows so that each graphite block is surrounded by blocks of oxide-based refractory material, the width $l_a$ of each block of oxide-based refractory material being comprised between 80 and 150 mm and the width $l_b$ of each graphite block being comprised between 10 and 50 mm.

2. A process according to claim 1, which is further characterized by placing at least one sheet of steel between the blocks in a given row and the blocks in the adjacent rows and between at least certain of the blocks in the same row.

3. A process according to claim 1 or 2, characterized in that the blocks of oxide-based refractory material are blocks of fused cast refractory material of the magnesia/chromium oxide type.

4. A process according to claim 3, characterized in that the blocks have the following composition, by weight: MgO: 55%, $Cr_2O_3$: 20.5%, FeO: 12.5%, $Al_2O_3$: 7%, $SiO_2$: 2.5%, CaO: 1.5%, $TiO_2$: 0.5%, others: 0.5%.

5. A process according to any of claims 1 to 4, characterized in that each graphite block has a width $l_b$ comprised between 20 and 40 mm.

6. A composite refractory element suitable for carrying out the process according to claim 1, which comprises at least one pair of adjoining blocks made of different refractory materials extending from the inner face to the outer face of the element, and which is covered with a steel sheet on at least two of its adjacent surfaces extending from the inner face to the outer face, characterized in that one of the pair of blocks is formed from an oxide-based refractory material and the other block is formed from graphite, and in that the width $l_a$ of each block of oxide-based refractory material is comprised between 80 and 150 mm and the width $l_b$ of each graphite block is comprised between 10 and 50 mm.

7. An element according to claim 6, characterized in that the steel sheet covers the four faces of the composite element extending from the inner face to the outer face.

8. An element according to claim 6 or 7, characterized in that the block of oxide-based refractory material is a block of a fused cast refractory material of the magnesia/chromium oxide type.

9. An element according to claim 8, characterized in that the block has the following composition, by weight: MgO: 55%, $Cr_2O_3$: 20.5%, FeO: 12.5%, $Al_2O_3$: 7%, $SiO_2$: 2.5%, CaO: 1.5%, $TiO_2$: 0.5%, others: 0.5%.

10. An element according to any of claims 6 to 9, characterized in that each graphite block has a width $l_b$ comprised between 20 and 40 mm.

0012681

FIG.:1

FIG.:2

FIG.:3

FIG.:4

1